Europäisches Patentamt

European Patent Office

Office européen des brevets

(11) Publication number: **0 421 593 A1**

# EUROPEAN PATENT APPLICATION

(21) Application number: 90309025.6

(51) Int. Cl.⁵: **A01N 37/12**

(22) Date of filing: **16.08.90**

(30) Priority: **01.09.89 JP 227863/89**

(43) Date of publication of application:
**10.04.91 Bulletin 91/15**

(84) Designated Contracting States:
**DE ES FR GB IT**

(71) Applicant: **SUMITOMO CHEMICAL COMPANY, LIMITED**
**5-33, Kitahama 4-chome Chuo-ku**
**Osaka(JP)**

(72) Inventor: **Shono, Yoshinori**
**2-1-241, Kuwatacho**
**Ibaraki-shi(JP)**
Inventor: **Sekihachi Kishino, Hiroko**
**10-4-457, Sonehigashinocho-2-chome**
**Toyonaka-shi(JP)**
Inventor: **Takahashi, Masahiro**
**14-7, Mefu-2-chome**
**Takarazuka-shi(JP)**
Inventor: **Kakimizu, Akiko**
**15-1-401, Takamatsucho**
**Nishinomiya-shi(JP)**
Inventor: **Miyakado, Masakazu**
**51, Kamigamo Arakusacho**
**Kita-ku, Kyoto-shi(JP)**
Inventor: **Matsuo, Noritada**
**29-2, Yamamichi, Minamino**
**Itami-shi(JP)**

(74) Representative: **Harrison, David Christopher et al**
**MEWBURN ELLIS 2 Cursitor Street**
**London EC4A 1BQ(GB)**

(54) Arthropod repellent composition.

(57) A composition for repelling harmful arthropods comprises 4-hydroxybutyl hexanoate and an inert carrier. This composition exhibits a strong repellent activity for a long period of time against tropical malaria carrying mosquitoes.

EP 0 421 593 A1

## ARTHROPOD REPELLENT COMPOSITION

This invention relates to a composition for repelling harmful arthropods, which composition comprises 4-hydroxybutyl hexanoate as its active ingredient.

As a repellent against Culicidae such as house mosquitoes, stripped mosquitoes, Anopheles mosquitoes and the like and blood suckers such as gnat, Stomoxys calcitrans and the like, N,N-diethyl-m-toluamide (hereinafter referred to as Deet) has hitherto been used in the form of spray, lotion, cream, etc. However, Deet has many faults. For example, it is inferior in repellent performance against Anopheles mosquitoes which are vectors of malaria, and it lacks persistency in efficacy.

In view of the above-mentioned state of things, the present inventors conducted extensive studies with the aim of finding a compound exhibiting a higher repellent activity against harmful arthropoda. As the result, it was found that 4-hydroxybutyl hexanoate (hereinafter referred to as "this compound") which has a known structure but is entirely unknown about repellent activity exhibits a strong repellent activity against harmful arthropoda, namely harmful insects and harmful mites. Based on this finding, this invention was accomplished.

As compared with hitherto known pest repellents, this compound exhibits a higher repellent activity for a longer period of time against tropical malaria carrying mosquitoes such as Anopheles mosquitoes and particularly against Anopheles albimanus which is a vector of malaria in Central America and Anopheles gambiae which is a vector of malaria in tropical Africa.

The pests against which this compound exhibits an effective repellent activity include not only the Anopheles mosquitoes mentioned above but also Aedes mosquitoes such as Aedes aegypti , Aedes albopictus and the like, house mosquitoes such as common mosquito (Culex pipiens pallens ), Culex tritaeniorhynchus and the like, blood suckers such as gnat, Stomoxys calcitrans , sandflies, biting midges and the like, and hygienic pests such as housefly and the like.

Further, this compound exhibits an excellent repellent activity against not only the blood suckers mentioned above but also other important blood sucking harmful arthoropods such as ticks belonging to Genus Amblyomma , Genus Rhipicephalus , Genus Dermacentor , Genus Ixodes , Genus Haemaphysalis , Genus Boophylus , etc.

Usually, this compound can be used in the form of a composition prepared by compounding it with an appropriate carrier (hereinafter, the composition thus prepared is referred to as "this composition"). For example, this compound can be put to use after forming it into a liquid formulation (lotion, aerosol, etc.) or a cream formulation.

Examples of the carrier which can be used for preparing a liquid formulation include water; alcohols such as methanol, ethanol, glycerine, polyethylene glycol and the like; ethers such as tetrahydrofuran, dioxane and the like; aliphatic hydrocarbons such as hexane, kerosene, paraffin, petroleum benzine and the like; and esters such as ethyl acetate and the like.

Into the liquid formulation, conventional adjuvants such as emulsifier, dispersant, spreading and wetting agent, suspension stabilizer, preservative, jetting material and the like may additionally be incorporated. Further, conventional coating film forming material may also be incorporated.

More concretely speaking, examples of these adjuvants include the followings:

emulsifiers such as soaps, polyoxyethylene fatty alcohol ether (e.g. polyoxyethylene oleyl ether and the like), polyoxyethylene alkylaryl ether (e.g. polyoxyethylene nonylphenyl ether and the like), polyoxyethylene fatty acid ester, fatty acid glyceride, sorbitan fatty acid ester, sulfuric ester of higher alcohol, and alkylarylsulfonic acid salt (e.g. sodium dodecylbenzenesulfonate and the like);

spreading, and wetting agent such as glycerine, polyethylene glycol and the like;

suspension stabilizer such as casein, gelatine, alginic acid, carboxymethyl-cellulose, gum arabic, hydroxypropyl-cellulose, bentonite and the like;

preservatives such as methyl 4-hydroxybenzoate, ethyl 4-hydroxybenzoate, propyl 4-hydroxybenzoate, butyl 4-hydroxybenzoate and the like;

jetting material such as dimethyl ether, chlorofluorocarbon, carbon dioxide gas and the like; and

film forming material such as cellulose derivatives (e.g. nitrocellulose, acetylcellulose, acetylbutyrylcellulose, methylcellulose and the like), vinyl resin (e.g. vinyl acetate resin and the like), polyvinyl alcohol and the like.

On the other hand, examples of the carrier which can be used for preparation of cream formulation include the followings:

hydrocarbons such as liquid paraffin, veseline, paraffin and the like;

silicones such as dimethylsiloxane and the like;

siliceous materials such as colloidal silica, bentonite and the like;

alcohols such as ethanol, stearyl alcohol, lauryl alcohol and the like;

polyhydric alcohols such as polyethylene glycol, ethylene glycol, glycerine and the like;

carboxylic acids such as lauric acid, stearic acid and the like; and

esters such as bees wax, lanolin and the like.

Further, the same formulation making adjuvants as used in liquid formulation may also be added.

It is also possible to form this compound into a microcapsule and use it in the form of lotion, aerosol and the like.

Into this composition, other pest repellents, synergistic agent, antioxidant, and other additives may also be incorporated.

Examples of said "other repellent" which can be incorporated into this composition include Deet, 2,3,4,5-bis-(Δ2-butylene)-tetrahydrofurfural, di-n-propyl isocinchomeronate, di-n-butyl succinate, 2-hydroxyethyl octyl sulfide, empethrin {1-ethynyl-2-methyl-2-pentenyl d-cis,trans-chrysanthemate (cis:trans ratio = 2:8)} and the like. Examples of the synergistic agent include piperonyl butoxide, isobornyl thiocyanate, S-421 and the like. Examples of the antioxidant include butylhydroxyanisole, dibutylhydroxytoluene, tocopherol, γ-oryzanol and the like.

This composition which has been prepared in the above-mentioned manner can directly be applied to the skin and the like. Otherwise, it is previously applied to an appropriate base material such as sheet, film, net, belt or the like by the method of coating, impregnation, kneading, dropping and the like, and the material thus prepared is used for covering exposed skin or clothing.

The base material is made of, for example, a synthetic fiber such as polyethylene, polypropylene, polyvinyl chloride, polyvinylidene chloride, polyester, Vinylon, Nylon and the like, synthetic resin made of the same elementary materials as above, animal or vegetable fiber such as silk, cotton, wool and the like, inorganic fiber such as aluminum, or mixture thereof. When a network base material is used, a finer network is more desirable. Usually, however, networks of 16 mesh or finer are usable in this invention with a sufficient effectiveness.

In this composition, quantity of this compound used as active ingredient varies depending on formulation form and method of application. When this compound is used in the form of liquid formulation such as lotion, aerosol and the like or in the form of cream formulation or when this compound is incorporated into a base material, quantity of the active ingredient may be 0.1 to 50% by weight, and preferably 1 to 20% by weight.

Dose of this composition is usually 0.01 to 1 mg per 1 cm$^2$ of the skin, and preferably 0.05 to 0.5 mg per 1 cm$^2$ of the skin, as expressed in terms of the quantity of this compound.

Next, this invention will be illustrated in more detail with reference to the following formulation examples and test examples. This invention is by no means limited by these examples.


Formulation Example 1

Ten parts of this compound is dissolved into ethanol and the total solution is adjusted to 35 parts, after which the solution is filled into an aerosol container. After attaching a bulb thereto, 1:1 mixture of Flon 11 and Flon 12, as a jetting material, is filled into the container under elevated pressure. Thus, an aerosol is obtained.


Formulation Example 2

To 10 parts of this compound are added 10 parts of stearic acid, 2 parts of cetyl alcohol, 1 part of lanolin, 2 parts of liquid paraffin and 62 parts of water. The whole materials are dissolved and mixed together with heating, into which 13 parts of hot glycerine is introduced and thoroughly stirred. Thus, a cream formulation is obtained.


Formulation Example 3

A mixture consisting of 6 parts of stearic acid, 0.5 part of lanolin and 6 parts of Tween 60 (trade name; polyoxyethylene sorbitan monostearate) is heated to 80°C, and it is introduced into a mixture consisting of 75 parts of water and 2.5 parts of salicylic acid kept at a temperature of 60°C. Then, 10 parts of this compound is added thereto with powerful stirring. Thus, a lotion is obtained.

3

Test Example 1

A test compound was diluted with ethanol to obtain a solution having a predetermined concentration. Its 90 microliters was treated onto the skin (2.5 x 4 cm) of side abdominal region of infant chicken of which feathers had been removed with a hair-cutter. Dosage of the composition treated was 3.0 g/m$^2$ as expressed in terms of weight of active ingredient. The infant chicken was immobilized so that only the treated area was exposed. Two heads of the chicken were placed on upside of a cage made of Nylon gauze (21 x 21 x 30 cm) in which adult Anopheles albimanus (6-8 days after emergence, including approximately equal numbers of male and female) were let fly. One minute after, the number of female mosquitoes attracted was counted. In the experiment, two cages were used per one compound, and the result was observed just after the treatment, 2 hours after it and 3 hours after it. When the repellency (%) of a compound dropped under 70%, further observation was stopped. Repellency (%) was calculated according to the following equation:

$$\text{Repellency (\%)} = \left(1 - \frac{\text{No. of attracted mosquitoes at treated chickens}}{\text{No. of attracted mosquitoes at untreated chickens}}\right) \times 100$$

The results are summarized in Table 1.

4

Table 1

| Test compound | Structural formula | Repellency (%) | | |
|---|---|---|---|---|
| | | Just after treatment | 2 hrs. after treatment | 3 hrs. after treatment |
| This compound | | 100 | 86.7 | 79.0 |
| Control compound (1) | | 99.2 | 48.9 | — |
| Control compound (2) | | 92.6 | 67.4 | 26.2 |

Control compound (1): Compound described in USP 2,627,489

Control compound (2): Deet

EP 0 421 593 A1

Test Example 2

A test was carried out in the same manner as in Test Example 1, except that Anopheles gambiae was used as the mosquito. The result was observed till 4 hours had passed after the treatment. As the control compound, the same ones as in Test Example 1 were used. When repellency (%) of a compound dropped under 70%, further observation was stopped. The results are summarized in Table 2.

Table 2

| Test compound | Repellency (%) | | | |
|---|---|---|---|---|
| | Just after treatment | 2 hours after | 3 hours after | 4 hours after |
| This compound | 100 | 94.6 | 96.7 | 75.9 |
| Control compound (1) | 100 | 64.0 | - | - |
| Control compound (2) | 100 | 85.7 | 42.9 | - |

Test Example 3

A test compound was made into a 10% (W/V) ethanolic solution. Then, 0.6 cc of the solution was uniformly applied to a region ranging from the wrist to 10 cm upper than it. Then, the hand was protected with an operating glove, a supporter or the like, so as to expose only the region to which the compound had been applied. Then, the hand was inserted into a cage in which about 500 heads of adult Anopheles albimanus (6-8 days after emergence, including approximately equal numbers of male and female) were released. After one minute, the hand was withdrawn and the number of bites was counted.

In all the runs, one hand of a person was treated with this compound and the other hand of the same person was treated with a control compound, for comparison. The experiment was repeated several times, first just after the treatment and thereafter at intervals of one hour, until activity of the compound dropped. As the control compound, the same ones as in Test Examples 1 and 2 were used. When the number of bites exceeded 10, experiment of the run was stopped. The results are summarized in Table 3.

Table 3

| Subject | Test compound | Number of bites | | | | | |
|---|---|---|---|---|---|---|---|
| | | Just after treatment | 1 hr. after | 2 hrs. after | 3 hrs. after | 4 hrs. after | 5 hrs. after |
| A | This compound | 0 | 0 | 0 | 0 | 1 | 5 |
| | Control compound (1) | 0 | 1 | 15 | - | - | - |
| B | This compound | 0 | 0 | 0 | 0 | 0 | 2 |
| | Control compound (1) | 0 | 0 | 3 | 18 | - | - |
| C | This compound | 0 | 0 | 0 | 0 | 0 | 0 |
| | Control compound (2) | 1 | 2 | 3 | 10 | - | - |
| D | This compound | 0 | 0 | 0 | 0 | 0 | 1 |
| | Control compound (2) | 2 | 2 | 3 | 15 | - | - |

**Claims**

1. An arthropod repellent composition which comprises an active ingredient and an inert carrier, characterised in that the active ingredient comprises 4-hydroxybutyl hexanoate.

2. 4-Hydroxybutyl hexanoate for use in repelling arthropods.

3. Use of 4-hydroxybutyl hexanoate in the manufacture of a preparation for repelling arthropods from the skin.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-2 627 489 (N.L. DRAKE et al.) <br> * The whole document * | 1-3 | A 01 N 37/12 |
| A | US-A-3 668 226 (R.P. QUINTANA et al.) <br> * Column 1, line 65 - column 2, line 22; columnn 3, lines 9-17; example 3; table; claim 1 * | 1-3 | |
| A | US-A-2 302 159 (L.W. WASUM) <br> * The whole document * | 1-3 | |

| TECHNICAL FIELDS SEARCHED (Int. Cl.5) |
|---|
| A 01 N |

The present search report has been drawn up for all claims

| Place of search | Date of completion of search | Examiner |
|---|---|---|
| The Hague | 06 December 90 | LAMERS W. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document